# FASCICULE DE BREVET EUROPEEN

(11) **EP 3 142 873 B1**
(45) Date de publication et mention de la délivrance du brevet: **13.10.2021**
(21) Numéro de dépôt: 15725843.5
(22) Date de dépôt: 11.05.2015
(51) Int. Cl.: B60G 9/02, B60G 9/00, B60T 1/06, B60T 8/171, B60G 7/02, B60G 21/05

(54) **SYSTEME D 'ANTIBLOCAGE DES ROUES D'UN VEHICULE**
ANTIBLOCKIERBREMSSYSTEM FÜR EIN FAHRZEUG
ANTILOCK BRAKING SYSTEM FOR A VEHICLE

(30) Priorité: 15.05.2014 FR 1454331
(43) Date de publication de la demande: 22.03.2017
(73) Titulaire: Renault S.A.S., 92100 Boulogne-Billancourt (FR)
(72) Inventeur: WILLEMENOT, Johann, 92350 Le Plessis Robinson (FR); FOUREST, Jean Baptiste, 78210 Saint Cyr L'école (FR); TERROITIN, Alan, 78190 Coulaines (FR)
(86) Numéro de dépôt international: PCT/FR2015/051229
(87) Numéro de publication internationale: WO 2015/173502

(56) Documents cités:
- EP-A1- 0 811 512
- EP-A1- 1 518 769
- GB-A- 2 324 869

## Description

Le domaine technique de l'invention concerne les véhicules automobiles et plus particulièrement un système d'antiblocage des roues. Un tel système, qui est plus connu sous l'abréviation ABS (de l'allemand *AntiBlockiertSystem*), constitue un système d'assistance au freinage utilisé sur les véhicules roulants et limitant le blocage des roues pendant les périodes de freinage intense.

Le document EP-1518769-A1 décrit un système d'antiblocage des roues d'un véhicule, comportant deux capteurs de vitesse des roues dudit véhicule.

Le document EP-0811512-A1 décrit un essieu arrière souple pour véhicules.

Le document GB-2324869-A décrit la fixation d'un capteur de vitesse sur un plateau tambour fixe.

Un système ABS est généralement constitué d'un capteur de vitesse pour chaque roue, d'un calculateur électronique et d'un système de régulation hydraulique de la pression de freinage. Lors d'un freinage d'urgence, si le système détecte le blocage d'une roue, cela signifie que la pression de freinage est trop forte compte tenu de l'adhérence disponible. Le système va alors pomper le liquide de freins, du frein vers un maître-cylindre, de façon à baisser la pression jusqu'à ce que la roue soit débloquée. Dès lors que la roue retrouve de l'adhérence, la pression de freinage est à nouveau augmentée de façon à optimiser la performance du freinage. Par conséquent, le système régule la pression de freinage autour du point de blocage de la roue par une succession rapide de blocages/déblocages.

Un système d'antiblocage des roues d'un véhicule selon l'invention, présente des performances accrues au niveau de la précision des mesures, tout en demeurant peu onéreux.

L'invention a pour objet un système d'antiblocage des roues d'un véhicule, ledit véhicule comportant un essieu arrière souple, et configuré pour assurer une fonction motrice dudit véhicule, ledit système comportant deux capteurs aptes chacun à mesurer la vitesse de l'une des deux roues reliées audit essieu.

La principale caractéristique d'un système antiblocage selon l'invention est que chaque capteur est fixé sur un plateau tambour fixe, ledit plateau étant solidarisé audit essieu et constituant la partie fixe d'un frein à tambour de chacune des deux roues. De cette manière, chaque capteur de mesure de la vitesse de roue est fixé de façon simple sur le plateau tambour, pour pouvoir effectuer directement des mesures fiables et reproductibles de la vitesse de roue, sans l'ajout de pièces intermédiaires susceptibles d'introduire des jeux et donc des imprécisions dur lesdites mesures. L'essieu présente la particularité de constituer une pièce souple reliant les deux roues arrières du véhicule, et apte à se déformer dans les virages pour encaisser les contraintes générées au niveau des roues. Un système antiblocage selon l'invention a été spécialement conçu pour les véhicules à propulsion, dans lesquels les roues arrière sont motrices.

Avantageusement, chaque plateau tambour est solidarisé à l'essieu par l'intermédiaire d'une chape de tête d'essieu et d'une partie fixe de roulement. Une chape de tête d'essieu est une pièce d'interface placée entre l'essieu et la partie fixe du roulement.

Préférentiellement, chaque plateau tambour est inséré entre la chape de tête d'essieu et la partie fixe du roulement, ladite partie fixe du roulement étant fixée par vissage à ladite chape. Autrement dit, chacun desdits plateaux est emprisonné entre la chape et la partie fixe du roulement d'une roue.

De façon préférentielle, chaque capteur est fixé sur le plateau tambour au moyen d'une vis de fixation. Il s'agit d'un moyen de fixation simple, rapide, fiable et largement éprouvé. Il permet de plus une fixation solide et peu encombrante.

Préférentiellement, chaque vis de fixation traverse le plateau tambour et une paroi de la chape contre laquelle ledit plateau est au contact. Avantageusement, la paroi de la chape et le plateau tambour sont plans et parallèles, de manière à établir une surface de contact étendue entre les deux éléments.

Avantageusement, le véhicule possède un arbre de transmission dont chacune des extrémités est implantée dans la paroi de chacune des deux chapes de tête d'essieu, chaque vis de fixation du capteur traversant ladite paroi en étant positionnée à distance de ladite extrémité. De cette manière, chaque élément demeure accessible sans être gêné par un élément voisin, et peut ainsi être facilement démonté.

De façon préférentielle, chaque chape comprend deux bras parallèles destinés à soutenir l'essieu. Ces deux bras assurent ainsi une stabilité de montage de l'essieu arrière du véhicule.

Préférentiellement, chaque capteur mesure la vitesse de roue au niveau d'une partie mobile d'un roulement de ladite la roue. La partie mobile du roulement tourne en même temps que la roue, et le capteur vient mesurer la vitesse de ladite roue au niveau de cette partie mobile.

Avantageusement, le capteur est orienté de telle manière qu'il permet une lecture axiale de la vitesse de roue.

De façon avantageuse, l'essieu possède un seul point de fixation à un élément de la caisse du véhicule, ledit point autorisant un mouvement en rotation dudit essieu. De cette manière, lors d'un virage, l'essieu souple va pouvoir se déformer et se mouvoir afin d'encaisser les contraintes générées au niveau des roues du véhicule.

Un système d'antiblocage selon l'invention présente l'avantage de pouvoir être facilement et rapidement monté dans un véhicule automobile, au moyen de manipulations simples et d'un outillage usuel. Il a de plus l'avantage de posséder un capteur de mesure de vitesse de la roue, dont le lieu de fixation permet de limiter la dispersion sur le jeu entre ledit capteur et une piste de lecture de ladite vitesse. Il présente enfin l'avantage d'être peu onéreux.

On donne, ci-après, une description détaillée d'un mode de réalisation préféré d'un système d'antiblocage selon l'invention, en se référant aux figures 1 à 6.
- La figure 1 est une vue en perspective simplifiée d'un train arrière de véhicule dans lequel est implanté un système d'antiblocage de roue selon l'invention,
- la figure 2 est une vue en perspective des éléments de liaison entre un essieu du train arrière de la figure 1 et un plateau tambour, sur lequel est fixé un capteur de mesure de vitesse de roue d'un système d'antiblocage selon l'invention,
- la figure 3 est une première vue en perspective des éléments de liaison de la figure 2 et d'un capteur de mesure de vitesse de roue d'un système d'antiblocage selon l'invention,
- la figure 4 est une deuxième vue en perspective sous un autre angle, des éléments de liaison de la figure 2 et du capteur de mesure de vitesse de roue de la figure 3,
- la figure 5 est une troisième vue en perspective sous un autre angle des éléments de liaison de la figure 2 et du capteur de mesure de vitesse de roue de la figure 3,
- la figure 6 est une vue en coupe des éléments de liaison de la figure 2 et du capteur de mesure de la vitesse de roue de la figure 3.

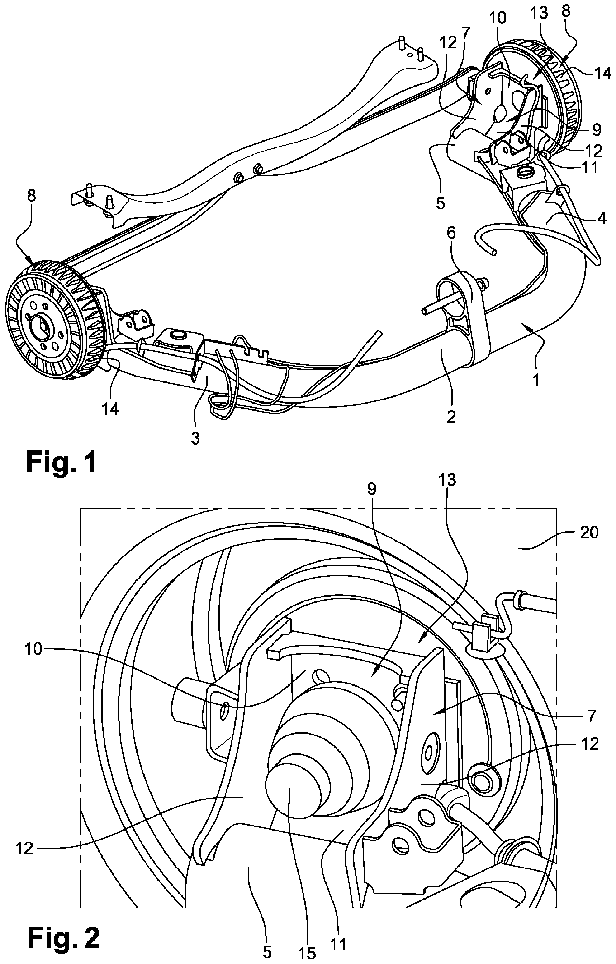

En se référant à la figure 1, un système antiblocage de roue selon l'invention est implanté dans un véhicule à propulsion, pour lequel les roues 20 arrière sont motrices. Un train arrière d'un tel véhicule, comprend schématiquement un essieu tubulaire souple 1 et incurvé, permettant de distinguer un segment tubulaire 2 central s'étendant transversalement dans le véhicule et deux segments latéraux 3,4 se terminant chacun par une extrémité libre 5, lesdits trois segments 2, 3, 4 étant en continuité les uns des autres. Le segment central 2 représente la partie la plus en avant de l'essieu 1 et possède un point de raccordement 6 à un élément de la caisse du véhicule, ledit point de raccordement 6 permettant un mouvement en rotation dudit segment avant 2, pour notamment encaisser les contraintes générées au niveau des roues arrière 20 du véhicule, dans les cas d'un virage.

En se référant aux figures 1 et 2, une chape 7 de tête d'essieu est placée au niveau de chacune des deux extrémités libres 5 de l'essieu 1, pour relier un frein à tambour 8 audit essieu 1. De façon simplifiée, une telle chape 8 comprend un corps central 9 de faible épaisseur constitué d'une paroi supérieure 10 plane et d'une paroi inférieure 11 plane, et deux bras 12 latéraux encadrant ledit corps central 9. Les deux parois 10,11 sont inclinées l'une par rapport à l'autre. Chaque bras latéral 12 est représenté par une paroi plane et de faible épaisseur, s'étendant le long desdites deux parois 10, 11, lesdits deux bras 12 étant parallèles entre eux. Chacun desdits bras 12 possède à l'une de ses extrémités une encoche arrondie ayant une courbure identique à celle d'une extrémité tubulaire libre 5 de l'essieu 1. Chaque frein à tambour 8 comprend un plateau tambour fixe 13 et une partie mobile en rotation 14 qui est solidarisée à la roue 20 et est appelée tambour. Plus précisément, le plateau tambour 13 a schématiquement la forme d'un disque plan de faible épaisseur, et vient s'insérer entre la paroi supérieure 10 du corps 9 de la chape 7 et une partie fixe 30 d'un roulement de la roue 20. Ladite partie fixe 30 du roulement est fixée à ladite paroi supérieure 10 du corps 9 de la chape 7 au moyen de vis 21. Chacune des deux extrémités libres 5 de l'essieu souple 1 vient se placer puis se fixer dans les deux encoches arrondies des deux bras 12 de la chape 7. Ainsi, l'essieu souple 1, les deux chapes 7, les deux parties fixes 30 des roulements et les deux plateaux tambour 13 constituent une pièce d'ensemble, qui est rigide.

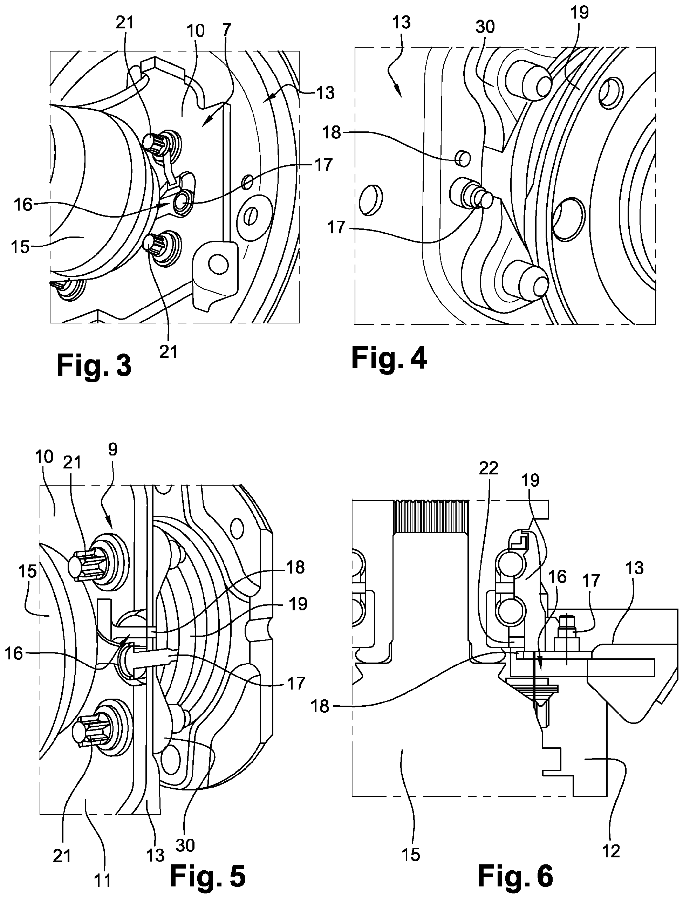

En se référant aux figures 2 et 3, un arbre de transmission 15 rectiligne et cylindrique relie les deux faces supérieures 10 des deux chapes 7 placées de part et d'autre de l'essieu 1 souple, pour communiquer aux deux roues arrière 20 un mouvement de rotation. A titre d'information, cet arbre 15 a été artificiellement sectionné sur le vue de la figure 2, pour permettre de montrer l'agencement des différents éléments placés derrière et à coté dudit arbre 15.

En se référant aux figures 3, 4, 5, 6 un système antiblocage de roue selon l'invention, comprend deux capteurs 16 destinés chacun à mesurer la vitesse d'une roue arrière 20 motrice. Chaque capteur 16 est fixé dans le plateau tambour 13 au moyen d'une vis 17 traversant ledit plateau 13 et la paroi supérieure 10 du corps central 9 de la chape 7. Le capteur 16 possède une extrémité sensible 18 débouchant au niveau de la partie 19 du roulement de la roue 20, qui est mobile en rotation. Plus précisément, cette extrémité sensible 18 est orientée de telle manière qu'elle permet une lecture axiale de la vitesse de roue, au niveau d'un joint 22 magnétique de cette partie 19 du roulement qui est mobile en rotation. Le jeu de lecture entre l'extrémité sensible 18 du capteur 16 et le joint magnétique est réduit et est compris entre 1 mm et 0.1 mm.

## Revendications

1. Système d'antiblocage des roues (20) d'un véhicule, ledit véhicule comportant un essieu (1) arrière souple, et configuré pour assurer une fonction motrice dudit véhicule, ledit système comportant deux capteurs (16) aptes chacun à mesurer la vitesse de l'une des deux roues (20) reliées audit essieu (1), **caractérisé en ce que** chaque capteur (16) est fixé sur un plateau (13) tambour fixe, ledit plateau (13) étant solidarisé audit essieu (1) et constituant la partie fixe d'un frein à tambour de chacune des deux roues (20), chaque plateau (13) tambour étant solidarisé à l'essieu (1, 5) par l'intermédiaire d'une chape (7) de tête d'essieu et d'une partie fixe (30) d'un roulement d'une roue (20).

2. Système d'antiblocage selon la revendication 1, **caractérisé en ce que** chaque plateau tambour (13) est inséré entre la chape (7) de tête d'essieu et la partie fixe (30) du roulement, et **en ce que** ladite partie fixe (30) du roulement est fixée par vissage à ladite chape (7).

3. Système d'antiblocage selon la revendication 2, **caractérisé en ce que** chaque capteur (16) est fixé sur le plateau (13) tambour au moyen d'une vis (17) de fixation.

4. Système d'antiblocage selon la revendication 3, **caractérisé en ce que** chaque vis (17) de fixation traverse le plateau (13) tambour et une paroi (10) de la chape (7) contre laquelle ledit plateau (13) est au contact.

5. Système d'antiblocage selon la revendication 4, **caractérisé en ce que** le véhicule possède un arbre de transmission (15) dont chacune des extrémités est implantée dans la paroi (10) de chacune des deux chapes (7) de tête d'essieu, et **en ce que** chaque vis (17) de fixation du capteur (16) traverse ladite paroi (10) en étant positionnée à distance de ladite extrémité.

6. Système d'antiblocage selon l'une quelconque des revendications 1 à 5, caractérisé en en ce que chaque chape (7) comprend deux bras (13) destinés à soutenir l'essieu (1, 5).

7. Système d'antiblocage selon l'une quelconque des revendications 1 à 6, **caractérisé en ce que** chaque capteur (16) mesure la vitesse de roue (20) au niveau d'une partie mobile (19) d'un roulement de ladite roue (20).

8. Système d'antiblocage selon la revendication 7, **caractérisé en ce qu'**au moins un des capteurs (16) est orienté de telle manière qu'il permet une lecture axiale de la vitesse de roue.

9. Système d'antiblocage selon l'une quelconque des revendications 1 à 8, **caractérisé en ce que** l'essieu (1) possède un seul point de fixation (6) à un élément de la caisse du véhicule, ledit point (6) autorisant un mouvement en rotation dudit essieu (1).

## Patentansprüche

1. Antiblockierbremssystem (20) für ein Fahrzeug, wobei das Fahrzeug eine flexible Hinterachse (1) umfasst, die dazu konfiguriert ist, eine Antriebsfunktion des Fahrzeugs zu übernehmen, wobei das System zwei Sensoren (16) umfasst, die jeweils dazu fähig sind, die Geschwindigkeit eines der zwei Räder (20), die mit der Achse (1) verbunden sind, zu messen, **dadurch gekennzeichnet, dass** jeder Sensor (16) an einem festen Bremsträger (13) befestigt ist, wobei der Träger (13) fest mit der Achse (1) verbunden ist und den festen Teil einer Trommelbremse jedes der zwei Räder (20) bildet, wobei jeder Bremsträger (13) mittels eines Achsengabelkopfes (7) und eines festen Teils (30) eines Lagers eines Rades (20) fest mit der Achse (1, 5) verbunden ist.

2. Antiblockiersystem nach Anspruch 1, **dadurch gekennzeichnet, dass** jeder Bremsträger (13) zwischen dem Achsengabelkopf (7) und dem festen Teil (30) des Lagers eingefügt ist und dass der feste Teil (30) des Lagers durch Verschrauben an dem Gabelkopf (7) befestigt ist.

3. Antiblockiersystem nach Anspruch 2, **dadurch gekennzeichnet, dass** jeder Sensor (16) mit Hilfe einer Befestigungsschraube (17) an dem Bremsträger (13) befestigt ist.

4. Antiblockiersystem nach Anspruch 3, **dadurch gekennzeichnet, dass** jede Befestigungsschraube (17) durch den Bremsträger (13) und eine Wand (10) des Gabelkopfes (7), an der der Träger (13) anliegt, hindurchgeht.

5. Antiblockiersystem nach Anspruch 4, **dadurch gekennzeichnet, dass** das Fahrzeug eine Antriebswelle (15) besitzt, von der jedes Ende in der Wand (10) jedes der zwei Achsengabelköpfe (7) eingesetzt ist, und dass jede Befestigungsschraube (17) des Sensors (16) durch die Wand (10) hindurchgeht und dabei mit Abstand zu dem Ende positioniert ist.

6. Antiblockiersystem nach einem der Ansprüche 1 bis 5, **dadurch gekennzeichnet, dass** jeder Gabelkopf (7) zwei Arme (13) beinhaltet, die dazu bestimmt sind, die Achse (1, 5) zu halten.

7. Antiblockiersystem nach einem der Ansprüche 1 bis 6, **dadurch gekennzeichnet, dass** jeder Sensor (16) die Geschwindigkeit eines Rades (20) im Bereich eines mobilen Teils (19) eines Lagers des Rades (20) misst.

8. Antiblockiersystem nach Anspruch 7, **dadurch gekennzeichnet, dass** mindestens einer der Sensoren (16) so ausgerichtet ist, dass er eine axiale Ablesung der Radgeschwindigkeit gestattet.

9. Antiblockiersystem nach einem der Ansprüche 1 bis 8, **dadurch gekennzeichnet, dass** die Achse (1) einen einzigen Punkt zur Befestigung (6) an einem Element des Fahrzeugaufbaus besitzt, wobei der Punkt (6) eine Drehbewegung der Achse (1) zulässt.

## Claims

1. Antilock braking system (20) for a vehicle, said vehicle comprising a rear axle (1) that is flexible, and configured to provide the drive of said vehicle, said system comprising two sensors (16) each able to measure the speed of one of the two wheels (20) that are connected to said axle (1), **characterized in that** each sensor (16) is fixed to a fixed drum plate (13), said plate (13) being secured to said axle (1) and constituting the fixed part of a drum brake of each of the two wheels (20), each drum plate (13) being secured to the axle (1, 5) via an axle-end yoke (7) and a fixed part (30) of a wheel bearing of a wheel (20).

2. Antilock braking system according to Claim 1, **characterized in that** each drum plate (13) is inserted between the axle-end yoke (7) and the fixed part (30) of the wheel bearing, and **in that** said fixed part (30) of the wheel bearing is fixed to said yoke (7) by screw fasteners.

3. Antilock braking system according to Claim 2, **characterized in that** each sensor (16) is fixed to the drum plate (13) by means of a fixing bolt (17).

4. Antilock braking system according to Claim 3, **characterized in that** each fixing bolt (17) passes through the drum plate (13) and a wall (10) of the yoke (7) with which said plate (13) is in contact.

5. Antilock braking system according to Claim 4, **characterized in that** the vehicle has a transmission shaft (15) of which each of the ends is fitted into the wall (10) of each of the two axle-end yokes (7), and **in that** each fixing bolt (17) for the sensor (16) passes through said wall (10), being positioned some distance from said end.

6. Antilock braking system according to any one of Claims 1 to 5, **characterized in that** each yoke (7) comprises two arms (13) intended to support the axle (1, 5).

7. Antilock braking system according to any one of Claims 1 to 6, **characterized in that** each sensor (16) measures the speed of a wheel (20) at a moving part (19) of a wheel bearing of said wheel (20).

8. Antilock braking system according to Claim 7, **characterized in that** at least one of the sensors (16) is oriented in such a way that it allows axial reading of the speed of the wheel.

9. Antilock braking system according to any one of Claims 1 to 8, **characterized in that** the axle (1) has a single point (6) of attachment to an element of the body shell of the vehicle, said point (6) allowing said axle (1) a rotational movement.
